# FASCICULE DE BREVET EUROPEEN

(11) **EP 4 042 563 B1**
(45) Date de publication et mention de la délivrance du brevet: **13.08.2025**
(21) Numéro de dépôt: 20775020.9
(22) Date de dépôt: 24.09.2020
(51) Int. Cl.: H02P 25/28, H02K 1/02, H02K 1/27, H02K 15/03, H02P 27/06, H02K 1/278

(54) **SYSTÈME D'ENTRAINEMENT D'UN DISPOSITIF DE COMPRESSION DE FLUIDE ET PROCÉDÉ D'ALIMENTATION ÉLECTRIQUE ASSOCIÉ**
ANTRIEBSSYSTEM EINES FLÜSSIGKEITSKOMPRESSIONSGERÄTS UND EIN ZUGEHÖRIGES VERFAHREN DER STROMVERSORGUNG
DRIVE SYSTEM OF A FLUID COMPRESSION DEVICE AND ASSOCIATED ELECTRICAL SUPPLY PROCESS

(30) Priorité: 07.10.2019 FR 1911069
(43) Date de publication de la demande: 17.08.2022
(73) Titulaire: IFP Energies nouvelles, 92852 Rueil-Malmaison (FR)
(72) Inventeur: BATTISTON, Alexandre, 92852 RUEIL-MALMAISON CEDEX (FR); HAJE OBEID, Najla, 92852 RUEIL-MALMAISON CEDEX (FR); SARABI, Siyamak, 92852 RUEIL-MALMAISON CEDEX (FR)
(74) Mandataire: IFP Energies nouvelles
(86) Numéro de dépôt international: PCT/EP2020/076733
(87) Numéro de publication internationale: WO 2021/069229

(56) Documents cités:
- EP-A1- 2 048 772
- JP-A- 2005 210 882
- JP-A- 2008 043 172
- JP-A- H09 182 388
- JP-A- H09 182 389

## Description

### DOMAINE TECHNIQUE

La présente invention concerne un système d'entraînement comportant un onduleur, une machine tournante électrique et un dispositif de commande, l'onduleur comportant une première entrée, une deuxième entrée, N bras connectés en parallèle entre la première entrée et la deuxième entrée, N étant un entier naturel supérieur ou égal à 2, chaque bras comprenant un demi-bras supérieur et un demi-bras inférieur en série, le demi-bras supérieur étant connecté à la première entrée, le demi-bras inférieur étant connecté à la deuxième entrée, le demi-bras supérieur et le demi-bras inférieur de chaque bras étant reliés entre eux en une sortie correspondante de l'onduleur, chaque demi-bras supérieur et chaque demi-bras inférieur comprenant au moins un module de commutation propre à commuter entre un état passant et un état bloqué, chacune de la première entrée et de la deuxième entrée étant destinée à être connectée à une borne respective d'une source de courant continu, chaque sortie étant associée à une phase électrique respective, la machine tournante comprenant un stator et un rotor mobile en rotation, relativement au stator, autour d'un axe de rotation, le stator comprenant N enroulements, chaque enroulement comportant une entrée et une sortie, l'entrée de chaque enroulement étant connectée à une sortie correspondante de l'onduleur, les sorties des enroulements du stator étant connectées en un point commun.

L'invention concerne également un procédé d'alimentation mis en œuvre par un tel système, ainsi qu'un ensemble de compression comprenant un tel système.

L'invention s'applique au domaine des machines tournantes électriques, en particulier pour une application aux turbomachines, en particulier à un compresseur ou turbocompresseur pour une application embarquée à bord d'un véhicule.

### ÉTAT DE LA TECHNIQUE ANTÉRIEURE

Un procédé classique de fabrication d'une machine tournante comprend la fixation, sur un corps de rotor, d'aimants permanents déjà magnétisés, le rotor étant ensuite disposé dans une cavité d'un stator correspondant.

Toutefois, un tel procédé présente de nombreux inconvénients. En particulier, lors de l'étape d'assemblage du rotor avec le stator, le rotor (qui comprend les aimants permanents déjà magnétisés) génère des forces magnétiques susceptibles d'entraîner des difficultés d'assemblage avec le stator, ainsi qu'un risque accru de chocs rotor/stator menant à un endommagement.

Pour surmonter de tels désagréments, il a été proposé de réaliser une machine tournante électrique en agençant, dans une cavité d'un stator, un rotor comprenant des éléments (dits « éléments magnétiques ») réalisés dans un matériau magnétique non magnétisé. En l'absence d'aimantation, le processus d'assemblage de la machine électrique est simplifié. Une fois ce montage réalisé, un champ magnétique est généré dans la cavité, au moyen d'enroulements dédiés montés dans le stator, pour magnétiser les éléments magnétiques du rotor.

Néanmoins, un tel procédé de fabrication ne donne pas entière satisfaction.

En effet, un tel procédé de fabrication requiert une structure dédiée à l'aimantation des éléments magnétiques du rotor, ce qui a un impact négatif sur l'encombrement et le coût de fabrication de la machine tournante.

En outre, la machine tournante obtenue par un tel procédé de fabrication n'est pas optimale dans le cadre d'une utilisation pour l'entraînement d'une turbomachine, en particulier d'un turbocompresseur pour véhicule. En effet, dans une telle application embarquée, la machine tournante n'est utilisée que de façon ponctuelle. Dans ce cas, lorsqu'elle n'est pas alimentée, la machine tournante génère un couple résistant à la rotation, ce qui entraîne des pertes à vide.

Un but de l'invention est donc de proposer un système d'entraînement qui soit plus simple et plus économique à réaliser, tout en générant moins de pertes lorsque la machine tournante qu'il comporte n'est pas sollicitée.

Il est connu du document EP2048772 un système d'entraînement de moteur à flux variable comprenant un onduleur pour entraîner un moteur à flux variable qui utilise un aimant fixe et un aimant variable, comprenant :
- une unité de génération de commande de couple pour générer une commande de couple pour le moteur à flux variable ;
- une unité de commande de flux variable pour modifier le flux en fonction d'un courant de magnétisation provenant de l'onduleur et magnétiser l'aimant variable ;
- un commutateur pour transmettre des références de courant d'axe D et Q sur la base de la commande de couple provenant de l'unité de génération de commande de couple ou des commandes de courant de magnétisation d'axe D et Q provenant de l'unité de commande de flux variable ;
- une unité de génération de demande de magnétisation pour générer, si des conditions prédéterminées sont remplies, une demande à l'unité de commande de flux variable pour magnétiser l'aimant variable ; et
- une unité de génération de commande de grille pour générer une commande de grille pour commander l'onduleur en fonction des références de courant d'axe D et Q basées sur la commande de couple ou des commandes de courant de magnétisation d'axe D et Q provenant du commutateur.

Il est également connu du document JP2008-043172 un système d'entraînement à flux magnétique variable comprend un moteur à aimant permanent qui utilise un aimant permanent, un inverseur qui entraîne un moteur à aimant permanent, et un moyen de magnétisation qui fait circuler des courants de magnétisation pour contrôler le flux magnétique de l'aimant permanent. L'aimant permanent est variable, sa densité de flux magnétique pouvant varier en fonction du courant de magnétisation provenant de l'onduleur. Le moyen de magnétisation fait circuler le courant de magnétisation qui est égal ou supérieur à une région de saturation magnétisante du corps magnétique de l'aimant variable.

### EXPOSÉ DE L'INVENTION

A cet effet, l'invention a pour objet un système d'entraînement du type précité, dans lequel le rotor comprend au moins un élément magnétique réalisé dans un matériau à aimantation modulable,
le dispositif de commande étant configuré pour, au cours d'une étape de magnétisation de chaque élément magnétique du rotor, commander l'onduleur de façon à, simultanément, pendant un intervalle temporel de magnétisation prédéterminé :
- pour chacun parmi m bras de l'onduleur, formant chacun un bras d'injection de courant, m étant un entier naturel compris entre 1 et N-1, commander chaque module de commutation du demi-bras supérieur correspondant pour qu'il se trouve dans l'état passant, et commander chaque module de commutation du demi-bras inférieur correspondant pour qu'il se trouve dans l'état bloqué ;
- pour chacun parmi k bras de l'onduleur, pris au sein des N-m autres bras de l'onduleur, et formant chacun un bras de sortie de courant, commander chaque module de commutation du demi-bras supérieur correspondant pour qu'il se trouve dans l'état bloqué, et commander chaque module de commutation du demi-bras inférieur correspondant pour qu'il se trouve dans l'état passant ; et
- pour chacun des N-m-k autres bras, commander chaque module de commutation correspondant pour qu'il se trouve dans l'état bloqué.

En effet, dans un tel système d'entraînement, lors de l'étape de magnétisation, l'onduleur est commandé de sorte que le champ magnétique destiné à aimanter les éléments magnétiques soit généré par les enroulements du stator qui sont usuellement utilisés pour mettre le rotor en mouvement. La magnétisation des éléments magnétiques est donc rendue possible sans structure dédiée additionnelle, ce qui confère un avantage en poids et en coût de fabrication par rapport aux systèmes de l'état de la technique.

En outre, aucune connexion n'est requise entre l'onduleur et le point neutre de la machine tournante. Ceci est avantageux, dans la mesure où ledit point neutre est susceptible d'être inaccessible.

En outre, un tel système d'entraînement confère la faculté de modifier l'amplitude et/ou la direction de l'aimantation des éléments magnétiques du rotor en fonction des conditions opérationnelles. Plus précisément, dans le système d'entraînement selon l'invention, la direction et l'amplitude du champ magnétique généré par le stator dépendent du choix des sorties de magnétisation de l'onduleur. Or, un tel champ magnétique statorique a une influence sur l'aimantation des éléments magnétiques du rotor.

En particulier, lorsque le fonctionnement de la machine tournante électrique n'est plus requis pour entraîner le dispositif de compression de fluide, le système d'entraînement selon l'invention autorise avantageusement, grâce à un choix judicieux des sorties de magnétisation, l'application aux éléments magnétiques d'un champ magnétique ayant pour effet de modifier, notamment réduire sensiblement, voire d'annuler, l'aimantation desdits éléments magnétiques. De tels éléments magnétiques sont ainsi dits « à aimantation modulable ».

Il en résulte que la machine tournante, qui est mécaniquement couplée au dispositif de compression de fluide et est entraînée par celui-ci même lorsqu'elle n'est pas électriquement sollicitée, génère une force de freinage bien moindre qu'avec un système d'entraînement de l'état de la technique dépourvu d'onduleur configuré pour modifier l'aimantation des éléments magnétiques en fonction des conditions opérationnelles.

L'aimantation modulable est pertinente sur un turbocompresseur électrifié, dont le fonctionnement et les appels de puissance électriques en modes moteur et générateur sont transitoires (mode de fonctionnement impulsionnel). Le rotor rendu magnétiquement inerte lorsque le fonctionnement de la machine électrique tournante n'est plus requis limite donc les pertes du système d'entraînement lorsque ce dernier n'est pas utilisé, par rapport à un système d'entraînement classique.

Suivant d'autres aspects avantageux de l'invention, le système d'entraînement comporte une ou plusieurs des caractéristiques suivantes, prise(s) isolément ou suivant toutes les combinaisons techniquement possibles :
- le dispositif de commande comporte un organe de détection d'un champ magnétique généré par le rotor, le dispositif de commande étant, en outre, configuré pour, au cours de l'étape de magnétisation :
   - détecter le champ magnétique généré par le rotor ;
   - choisir chacun des m bras d'injection de courant et des k bras de sortie de courant en fonction du champ magnétique détecté ;
- le système d'entraînement comprend, en outre, un premier organe de commutation, un deuxième organe de commutation et une charge, le premier organe de commutation étant connecté en série entre chaque bras et la deuxième entrée de l'onduleur, le deuxième organe de commutation et la charge étant reliés en série, et connectés en parallèle du premier organe de commutation, le dispositif de commande étant configuré pour, au cours de l'étape de magnétisation, commander le premier organe de commutation pour qu'il se trouve dans un état bloqué, et commander le deuxième organe de commutation pour qu'il se trouve dans un état passant ;
- le dispositif de commande est, en outre, configuré pour mettre en œuvre une étape d'excitation de la machine tournante, postérieure à l'étape de magnétisation, le dispositif de commande étant configuré pour, lors de l'étape d'excitation, commander l'onduleur selon une loi de commande d'onduleur prédéterminée pour connecter, successivement au cours du temps, chaque sortie de l'onduleur à la première entrée et/ou la deuxième entrée de l'onduleur afin d'entraîner le rotor en rotation autour d'un axe de rotation correspondant ;
- la durée de l'intervalle temporel de magnétisation dépend du matériau à aimantation modulable et/ou des m bras d'injection de courant et des k bras de sortie de courant ;
- la durée de l'intervalle temporel de magnétisation dépend, en outre, d'une impédance de la charge.

En outre, l'invention a pour objet un procédé d'alimentation d'une machine tournante électrique au moyen d'un onduleur,
l'onduleur comportant une première entrée, une deuxième entrée, N bras connectés en parallèle entre la première entrée et la deuxième entrée, N étant un entier naturel supérieur ou égal à 2,
chaque bras comprenant un demi-bras supérieur et un demi-bras inférieur en série, le demi-bras supérieur étant connecté à la première entrée, le demi-bras inférieur étant connecté à la deuxième entrée, le demi- bras supérieur et le demi-bras inférieur de chaque bras étant reliés entre eux en une sortie correspondante de l'onduleur,
chacun du demi-bras supérieur et du demi-bras inférieur comprenant au moins un module de commutation propre à commuter entre un état passant et un état bloqué, chacune de la première entrée et de la deuxième entrée étant destinée à être connectée à une borne respective d'une source de courant continu, chaque sortie étant associée à une phase électrique respective,
la machine tournante comprenant un stator et un rotor mobile en rotation, relativement au stator, autour d'un axe de rotation, le stator comprenant N enroulements, chaque enroulement comportant une entrée et une sortie, l'entrée de chaque enroulement étant connectée à une sortie correspondante de l'onduleur, les sorties des enroulements du stator étant connectées en un point commun,
le rotor comprend au moins un élément magnétique réalisé dans un matériau à aimantation modulable,
le procédé d'alimentation comprenant une étape de magnétisation de chaque élément magnétique du rotor comportant :
   - la connexion de chacune de la première entrée et de la deuxième entrée à une borne respective d'une source de courant continu ; et
   - simultanément, pendant un intervalle temporel de magnétisation prédéterminé :
      - pour chacun parmi m bras de l'onduleur, formant chacun un bras d'injection de courant, m étant un entier naturel compris entre 1 et N-1, la commande de chaque module de commutation du demi-bras supérieur correspondant pour qu'il se trouve dans l'état passant, et la commande de chaque module de commutation du demi-bras inférieur correspondant pour qu'il se trouve dans l'état bloqué ;
      - pour chacun parmi k bras, pris au sein des N-m autres bras de l'onduleur, et formant chacun un bras de sortie de courant, la commande de chaque module de commutation du demi-bras supérieur correspondant pour qu'il se trouve dans un état bloqué, et la commande de chaque module de commutation du demi-bras inférieur correspondant pour qu'il se trouve dans un état passant ; et
      - pour chacun des N-m-k autres bras, la commande de chaque module de commutation correspondant pour qu'il se trouve dans l'état bloqué,
de façon à injecter simultanément, dans chaque enroulement, un courant électrique pour générer, dans la cavité du stator, un champ magnétique non nul destiné à magnétiser chaque élément magnétique.

Suivant d'autres aspects avantageux de l'invention, le procédé d'alimentation comporte la ou les caractéristique(s) suivante(s), prise(s) isolément ou en combinaison :
- le procédé d'alimentation comporte, en outre, lors de l'étape de magnétisation :
   - la détection d'un champ magnétique généré par le rotor ; et
   - le choix de chacun des m bras d'injection de courant et des k bras de sortie de courant en fonction du champ magnétique détecté ;
- le procédé d'alimentation comporte, en outre, une étape d'excitation de la machine tournante ultérieure à l'étape de magnétisation, et comprenant la commande de l'onduleur selon une loi de commande d'onduleur prédéterminée pour connecter, successivement au cours du temps, chaque sortie de l'onduleur à la première entrée et/ou la deuxième entrée de l'onduleur, de façon à injecter du courant électrique dans les enroulements du stator pour générer, dans la cavité du stator, un champ magnétique tournant destiné à entraîner le rotor en rotation autour de l'axe de rotation.

En outre, l'invention a pour objet un ensemble de compression comprenant un dispositif de compression de fluide et un système d'entraînement tel que défini ci-dessus, le dispositif de compression de fluide étant couplé au stator de la machine tournante du système d'entraînement pour son entraînement.

Suivant un aspect avantageux de l'invention, le système d'entraînement comporte la caractéristique : le dispositif de compression de fluide est un turbocompresseur associant une turbine et un compresseur, notamment pour un moteur à combustion interne, ou une microturbine.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
[Fig. 1] la figure 1 est une représentation schématique d'un ensemble comprenant un système d'entraînement selon l'invention, associé à une source de courant continu ;
[Fig. 2] la figure 2 est une vue schématique en section d'une machine tournante du système d'entraînement de la figure 1, selon un plan transversal de la machine tournante selon un mode de réalisation de l'invention ;
[Fig. 3] la figure 3 est un schéma illustrant le circuit électrique de l'ensemble de la figure 1, pendant une étape de magnétisation durant laquelle du courant électrique est injecté dans un seul enroulement d'un stator de la machine tournante de la figure 2 ;
[Fig. 4] la figure 4 est une vue schématique en section du stator de la machine tournante de la figure 2, selon un plan transversal de la machine tournante, pendant l'étape de magnétisation de la figure 3 ; et
[Fig. 5] la figure 5 est similaire à la figure 4, un champ magnétique total régnant dans une cavité du stator étant représenté.

### DESCRIPTION DÉTAILLÉE

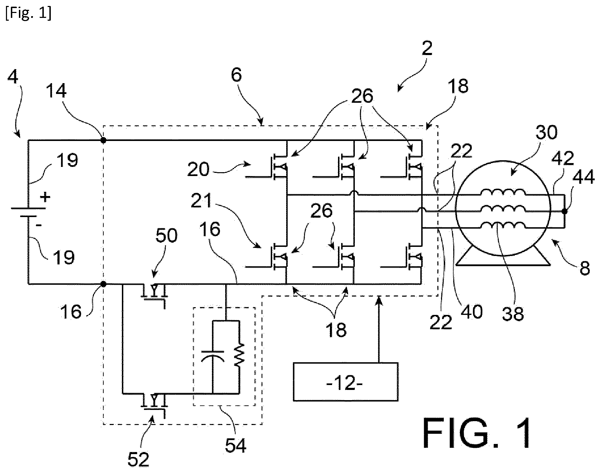

Un exemple d'un système d'entraînement 2 selon l'invention est illustré par la figure 1. Sur cette figure, une source 4 de courant continu est connectée en entrée du système d'entraînement 2.

Le système d'entraînement 2 comporte un onduleur 6, une machine tournante 8 électrique et un dispositif de commande 12.

L'onduleur 6 est configuré pour acheminer du courant électrique depuis la source 4 vers des enroulements (décrits ultérieurement) de la machine tournante 8, et ce de façon sélective.

La machine tournante 8 est destinée à entraîner en rotation un élément connecté à son arbre de sortie, en particulier un dispositif de compression de fluide, par exemple un compresseur ou un turbocompresseur.

En outre, le dispositif de commande 12 est configuré pour commander l'onduleur 6.

L'onduleur 6 comporte une première entrée 14 et une deuxième entrée 16, ainsi que N bras 18. N est un entier naturel supérieur ou égal à 2, par exemple égal à 3, comme illustré par la figure.

Les entrées 14, 16 de l'onduleur 6 forment les entrées du système d'entraînement 2. Chacune de la première et de la deuxième entrée 14, 16 est destinée à être connectée à une borne 19 respective de la source 4.

Les N bras 18 sont connectés en parallèle entre la première entrée 14 et la deuxième entrée 16 de l'onduleur 6.

Chaque bras 18 comprend un demi-bras supérieur 20 et un demi-bras inférieur 21 en série, reliés entre eux en un point milieu formant une sortie 22 correspondante de l'onduleur 6. Chaque sortie 22 est associée à une phase électrique respective, et est raccordée à un enroulement correspondant de la machine tournante 8.

Pour chaque bras 18, le demi-bras supérieur 20 correspondant est connecté à la première entrée 14, tandis que le demi-bras inférieur 21 correspondant est connecté à la deuxième entrée 16.

Chaque demi-bras supérieur 20 et chaque demi-bras inférieur 21 comprend au moins un module de commutation 26 propre à commuter entre un état bloqué empêchant la circulation de courant électrique entre ses bornes, et un état passant permettant la circulation du courant électrique. Par exemple, sur la figure 1, chaque demi-bras supérieur 20 et chaque demi-bras inférieur 21 comprend un module de commutation 26. Par exemple, les modules de commutation 26 de l'onduleur 6 sont des transistors bipolaires à grille isolée, également appelés IGBT (de l'anglais « *Insulated Gate Bipolar Transistor* ») ou des transistors à effet de champ à grille métal-oxyde, également appelés MOSFET (de l'anglais « *Metal Oxide Semiconductor Field Effect Transistor* »).

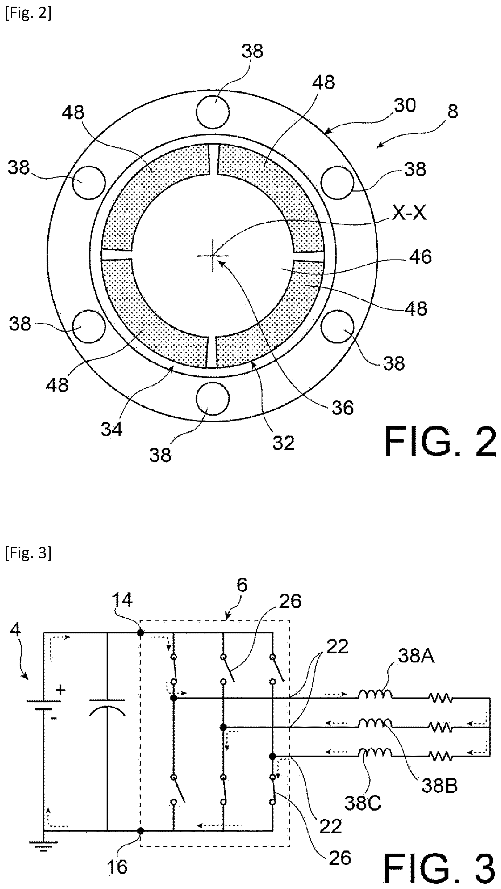

Comme illustré par la figure 2, de manière schématique et non limitative, la machine tournante 8 comprend un stator 30 et un rotor 32 mobile en rotation, relativement au stator 30, autour d'un axe de rotation X-X.

Plus précisément, le stator 30 comprend une cavité 34 dans laquelle le rotor 32 est agencé.

L'arbre de sortie 36 de la machine tournante 8, mentionné précédemment, s'étend le long de l'axe de rotation X-X et est solidaire du rotor 32 pour être entraîné en rotation autour de l'axe de rotation X-X.

Le stator 3 comprend N enroulements 38, agencés de façon connue pour générer un champ magnétique dans la cavité 34 lorsqu'ils sont traversés par un courant électrique. Par exemple, les enroulements 38 sont agencés de sorte que les champs magnétiques correspondant à deux enroulements 38 distincts soient images l'un de l'autre par une rotation d'un angle non nul multiple de 360°/N.

Le champ magnétique généré par les enroulements 38 est, notamment, destiné à former un champ magnétique d'excitation pour mettre le rotor 32 en rotation autour de l'axe de rotation X-X.

Comme cela sera décrit ultérieurement, le champ magnétique généré par les enroulements 38 est également destiné à former un champ magnétique de magnétisation pour magnétiser au moins un élément magnétique 48 (par exemple des inserts) du rotor 32 préalablement à sa mise en rotation.

Chaque enroulement 38 comporte une entrée 40 et une sortie 42.

L'entrée 40 de chaque enroulement 38 est connectée à une sortie 22 correspondante de l'onduleur 6. En outre, les sorties 42 des enroulements 38 sont connectées en un point commun 44, appelé point neutre de la machine tournante 8. La connexion des sorties 42 en le point neutre 44 est réalisée, selon le cas de figure, à l'extérieur ou à l'intérieur de la machine tournante 8.

Le rotor 32 comprend au moins un élément magnétique 48 réalisé dans un matériau à aimantation modulable.

Par « matériau à aimantation modulable », il est entendu, au sens de la présente invention, un matériau ferromagnétique, de préférence un matériau ferromagnétique doux, ou encore un matériau ferromagnétique mi-dur.

Un matériau ferromagnétique doux (en anglais « *soft magnetic material* ») est un matériau ferromagnétique présentant un champ coercitif inférieur à 1000 A.m⁻¹ (ampère par mètre).

En outre, un matériau ferromagnétique mi-dur (en anglais « *semi-hard magnetic material* ») est un matériau ferromagnétique présentant un champ coercitif compris entre 1000 A.m⁻¹ et 100000 A.m⁻¹, de préférence entre 1000 A.m⁻¹ et 10000 A.m⁻¹.

Un tel matériau est, par exemple, un alliage dit FeCrCo comprenant du fer, du chrome et du cobalt, ou encore un alliage dit AlNiCo comprenant de l'aluminium, du nickel et du cobalt.

Par exemple, chaque élément magnétique 48 est un insert solidaire d'un corps 46 du rotor 32. Par exemple, chaque élément magnétique 48 est intégré dans le corps 46, ou encore agencé en périphérie du corps 46. Selon un aspect, il peut prendre la forme d'un anneau.

Dans ce cas, le rotor 32 comporte avantageusement une pluralité d'éléments magnétiques 48 agencés circonférentiellement autour de l'axe de rotation X-X, de préférence à intervalle angulaire régulier.

De préférence, chaque insert 48 s'étend le long de l'axe de rotation X-X.

Selon une variante non représentée, l'élément magnétique 48 forme tout ou partie du corps du rotor 32.

Comme décrit précédemment, le dispositif de commande 12 est configuré pour commander l'onduleur 6. En particulier, le dispositif de commande 12 est configuré pour commander l'onduleur 6 afin de connecter sélectivement les sorties 22 de l'onduleur 6 à la première entrée 14 et/ou la deuxième entrée 16 de l'onduleur 6.

Plus précisément, le dispositif de commande 12 est configuré pour, au cours d'une étape de magnétisation de chaque élément magnétique 48 du rotor 32, commander l'onduleur 6 de façon à faire circuler un courant électrique continu à travers les enroulements 38 du stator 30 pour générer, dans la cavité 34, un champ magnétique non nul destiné à faire apparaître une aimantation au sein de chaque élément magnétique 48.

En particulier, le dispositif de commande 12 est configuré pour, au cours de l'étape de magnétisation, commander l'onduleur 6 de façon à, simultanément, pendant un intervalle temporel de magnétisation prédéterminé :
- pour chacun parmi m bras 18 de l'onduleur 6, formant chacun un bras d'injection de courant, m étant un entier naturel compris entre 1 et N-1, commander chaque module de commutation 26 du demi-bras supérieur 20 correspondant pour qu'il se trouve dans l'état passant, et commander chaque module de commutation 26 du demi-bras inférieur 21 correspondant pour qu'il se trouve dans l'état bloqué ;
- pour chacun parmi k bras 18 au sein des N-m autres bras 18 de l'onduleur 6, m étant un entier naturel compris entre 1 et N-m, formant chacun un bras de sortie de courant, commander chaque module de commutation 26 du demi-bras supérieur 20 correspondant pour qu'il se trouve dans l'état bloqué, et commander chaque module de commutation 26 du demi-bras inférieur 21 correspondant pour qu'il se trouve dans l'état passant ; et
- pour chacun des N-m-k autres bras 18, formant chacun un bras inactif, commander chaque module de commutation 26 correspondant pour qu'il se trouve dans l'état bloqué.

Dans un mode de réalisation préféré, k vaut N-m, c'est-à-dire qu'il n'y a pas de bras inactif au cours de l'étape de magnétisation.

Les m bras d'injection de courant et les k bras de sortie de courant sont, par exemple, prédéterminés.

De cette façon, pendant l'étape de magnétisation, le courant électrique issu de la source 4 est acheminé vers la première entrée 14, puis, à travers les demi-bras supérieurs 20 des m bras d'injection de courant, vers les enroulements 38 connectés auxdits bras d'injection de courant. Le courant parvient ensuite au point commun 44, puis circule dans le sens opposé, c'est-à-dire depuis le point commun 44 vers l'extérieur de la machine tournante 8, à travers les k autres enroulements 38 connectés aux bras de sortie de courant. Puis, le courant est acheminé vers la deuxième entrée 16 à travers les demi-bras inférieurs 21 desdits bras de sorties de courant. Les modules de commutation 26 des N-m-k autres bras 18 se trouvant dans l'état bloqué, aucun courant ne circulent à travers les enroulements qui leur sont connectés.

Par la suite, un enroulement 38 connecté à un bras d'injection de courant ou à un bras de sortie de courant sera appelé « enroulement actif ».

Le parcours du courant électrique décrit ci-dessus correspond à la situation où la première entrée 14 est portée à un potentiel électrique plus élevé que la deuxième entrée 16. Dans la situation inverse, le courant électrique suit le chemin opposé.

Une telle circulation de courant dans les enroulements 38 actifs conduit à la génération, par chacun d'entre eux, d'un champ magnétique suivant une direction correspondante. Par un choix judicieux des m bras d'injection de courant et des k bras de sortie de courant, un champ magnétique total non nul, destiné à magnétiser chaque élément magnétique 48, est généré dans la cavité 34 pendant l'intervalle temporel de magnétisation.

Les enroulements 38 sont agencés de façon à générer des champs magnétiques suivant des directions différentes. En outre, pour un enroulement 38 donné, le sens du champ magnétique généré par ledit enroulement dépend du sens du courant électrique qui le traverse (c'est-à-dire de son entrée 40 vers le point commun 44, ou du point commun 44 vers son entrée 40). Il en résulte que l'amplitude (de même que la direction et le sens) du champ magnétique total dans la cavité 34 varie en fonction des bras 18 jouant le rôle de bras d'injection de courant et de ceux jouant le rôle de bras de sortie de courant. Par conséquent, la durée minimale permettant une magnétisation de chaque élément magnétique 48, c'est-à-dire de la durée minimale de l'intervalle temporel de magnétisation, varie en fonction de la combinaison choisie de bras d'injection de courant et de bras de sortie de courant.

De préférence, la durée de l'intervalle temporel de magnétisation est également choisie en fonction du matériau à aimantation modulable dans lequel est réalisé chaque élément magnétique 48. En effet, l'intervalle temporel de magnétisation correspond à l'intervalle temporel pendant lequel chaque élément magnétique 48 est soumis, pendant l'étape de magnétisation, au champ magnétique destiné à entraîner sa magnétisation. Pour une amplitude donnée d'un tel champ magnétique, la durée de l'intervalle temporel de magnétisation est choisie pour assurer une magnétisation de chaque élément magnétique 48.

Dans l'exemple de la figure 3, illustrant le fonctionnement du système d'entraînement 2 de la figure 1, la machine tournante 8 est une machine triphasée. Le nombre m est choisi égal à 1, et le nombre k choisi égal à 2. En outre, le trajet du courant électrique est illustré par des flèches en pointillés.

Dans cet exemple, pendant l'étape de magnétisation, le dispositif de commande 12 commande l'onduleur 6 de sorte que, pour l'unique bras d'injection de courant, le module de commutation 26 du demi-bras supérieur 20 correspondant se trouve dans l'état passant, et le module de commutation 26 du demi-bras inférieur 21 correspondant se trouve dans l'état bloqué. Il en résulte que l'enroulement, noté 38A, connecté à la sortie 22 du bras d'injection de courant, est traversé par le courant électrique délivré par la source 4 dans un sens allant de la première entrée 14 de l'onduleur vers le point commun 44 de la machine tournante 8.

Simultanément, le dispositif de commande 12 commande l'onduleur 6 de sorte que, pour chacun des deux bras de sortie de courant, le module de commutation 26 du demi-bras supérieur 20 correspondant se trouve dans l'état bloqué, et le module de commutation 26 du demi-bras inférieur 21 correspondant se trouve dans l'état passant. Il en résulte que les enroulements, notés 38B, 38C, connectés respectivement aux bras de sortie de courant, sont traversés par le courant électrique dans un sens allant du point commun 44 de la machine tournante 8 vers la deuxième entrée 16 de l'onduleur 6.

Les enroulements 38 étant supposés identiques, il résulte de ce qui précède que le courant traversant l'enroulement 38A présente une intensité iₘ, tandis que le courant traversant chacun des enroulements 38B, 38C présente une intensité iₘ/2.

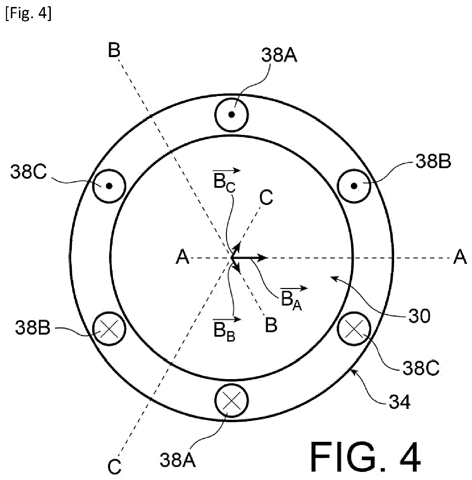

Par conséquent, et comme cela est illustré par la figure 4, l'enroulement 38A génère, suivant un axe A-A correspondant, un champ magnétique B̅_̅{̅A̅}̅ d'amplitude Bₘ dépendant de l'intensité iₘ du courant. En outre, chacun des enroulements 38B et 38C génère, suivant un axe respectif B-B, C-C, un champ magnétique, respectivement noté B̅_̅{̅B̅}̅, B̅_̅{̅C̅}̅, d'amplitude Bₘ/2.

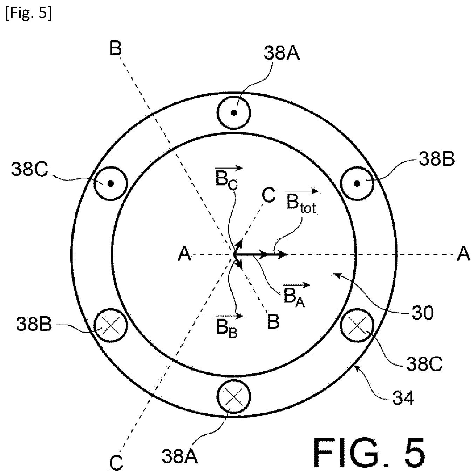

Du fait du sens de circulation du courant électrique dans les enroulements 38 de la machine tournante 8 pendant l'étape de magnétisation, l'angle orienté entre les champs magnétiques B̅_̅{̅B̅}̅ et B̅_̅{̅A̅}̅ présente une valeur positive de 60°, et l'angle orienté entre les champs magnétiques B̅_̅{̅A̅}̅ et B̅_̅{̅C̅}̅ présente également une valeur positive de 60°. Il en découle que le champ magnétique total B̅ₜ̅ₒ̅ₜ̅, qui est la résultante des champs magnétiques B̅_̅{̅A̅}̅ , B̅_̅{̅B̅}̅ et B̅_̅{̅C̅}̅, est colinéaire à B̅_̅{̅A̅}̅ et présente une amplitude égale à 3Bₘ/2, comme cela apparaît sur la figure 5.

Pour une amplitude suffisante du champ magnétique total et une durée suffisante de l'intervalle temporel de magnétisation, une aimantation apparaît au sein de chaque élément magnétique 48, qui perdure à l'issue de l'intervalle temporel de magnétisation.

Il est à noter que, sur les figures 4, 5, le stator 30 comprend un seul pôle par enroulement 38. Toutefois, un nombre plus élevé de pôles par enroulement 38 est envisageable.

En outre, le dispositif de commande 12 est avantageusement configuré pour mettre en œuvre l'étape de magnétisation préalablement à une étape d'excitation de la machine tournante 6. Une telle étape d'excitation comprend la commande de l'onduleur 6 de façon à injecter, dans les enroulements 38 du stator 30, du courant électrique pour générer, dans la cavité 34, un champ magnétique d'excitation destiné à entraîner la rotation du rotor 32 autour de l'axe de rotation X-X.

Plus précisément, le dispositif de commande 12 est configuré pour, au cours de l'étape d'excitation, commander l'onduleur 6 selon une loi de commande d'onduleur prédéterminée pour connecter, successivement au cours du temps, la première entrée 14 et la deuxième entrée 16 de l'onduleur 6 à chacune des sorties 22 de l'onduleur 6.

Une telle étape d'excitation a pour but de provoquer la rotation du rotor 32 autour de son axe X-X. Ceci est rendu possible par la présence d'une aimantation au sein des éléments magnétiques 48 du rotor 32, due à la mise en œuvre de l'étape de magnétisation précédemment décrite.

De façon optionnelle, le système d'entraînement 2 comprend, en outre, un premier organe de commutation 50, un deuxième organe de commutation 54 et une charge 56.

Comme cela apparaît sur la figure 1, le premier organe de commutation 50 est connecté en série entre chaque bras 18 et la deuxième entrée 16 de l'onduleur 6. En outre, le deuxième organe de commutation 52 et la charge 54 sont reliés en série, et connectés en parallèle du premier organe de commutation 50.

Chacun du premier organe de commutation 50 et du deuxième organe de commutation 52 est propre à commuter entre un état bloqué empêchant la circulation de courant électrique, et un état passant permettant la circulation d'un courant électrique.

Chaque organe de commutation 50, 52 est, par exemple, un transistor MOSFET ou un relais.

Suivant cette variante, le dispositif de commande 12 est avantageusement configuré pour, au cours de l'étape de magnétisation, commander simultanément le premier organe de commutation 50 pour qu'il se trouve dans l'état bloqué, et le deuxième organe de commutation 52 pour qu'il se trouve dans l'état passant.

Dans ce cas, pendant l'étape de magnétisation, la charge 54 est insérée dans le circuit parcouru par le courant électrique entre la première entrée 14 et la deuxième entrée 16, de sorte que l'intensité du courant circulant dans les enroulements 38 pendant l'étape de magnétisation est également fonction de l'impédance de la charge 50.

L'ajout d'une telle charge 54 est avantageux, dans la mesure où l'intensité du courant pendant l'étape de magnétisation est réduite par rapport à celle du courant qui circulerait en l'absence de charge, notamment dans le cas des machines électriques tournantes possédant de faibles inductances statoriques (par exemple de l'ordre de quelques microhenrys). Les composants de l'onduleur 6 et du stator 30 sont moins susceptibles d'être endommagés par des surintensités.

Le fonctionnement du système d'entraînement 2 va maintenant être décrit.

Au cours d'une étape de montage de la machine tournante 8, les éléments magnétiques 48 du rotor 32 ne présentent aucune aimantation, et le rotor 32 est agencé dans la cavité 34 du stator 30.

En outre, au cours d'une étape d'assemblage du système d'entraînement 2, l'entrée 40 de chaque enroulement 38 du stator 30 est connectée à une sortie 22 correspondante de l'onduleur 6.

Puis, chacune de la première entrée 14 et de la deuxième entrée 16 de l'onduleur 6 est connectée à une borne respective de la source 4 de courant continu.

Puis, au cours de l'étape de magnétisation, le dispositif de commande 12 commande l'onduleur 6 de sorte que, pendant l'intervalle temporel de magnétisation :
- pour chaque bras 18 parmi les m bras d'injection de courant, chaque module de commutation 26 de son demi-bras supérieur 20 se trouve dans l'état passant, et chaque module de commutation 26 de son demi-bras inférieur 21 se trouve dans l'état bloqué ;
- pour chaque bras 18 parmi les k bras de sortie de courant, chaque module de commutation 26 de son demi-bras supérieur 20 se trouve dans l'état bloqué, et chaque module de commutation 26 de son demi-bras inférieur 21 pour qu'il se trouve dans l'état passant ; et
- pour chaque bras 18 parmi les N-m-k bras inactifs, qui ne sont ni des bras d'injection de courant ni des bras de sortie de courant, chaque module de commutation 26 correspondant se trouve dans l'état bloqué.

Il en résulte qu'un courant électrique circule à travers chaque enroulement actif 38, pour générer, dans la cavité 34 du stator 30, un champ magnétique destiné à magnétiser chaque élément magnétique 48.

Puis, lors de l'étape d'excitation de la machine tournante 8, ultérieure à l'étape de magnétisation, le dispositif de commande 12 commande l'onduleur 6 selon une loi de commande d'onduleur prédéterminée (commande par modulation de largeur d'impulsion, par exemple) pour connecter, successivement au cours du temps, la première entrée 14 et la deuxième entrée 16 de l'onduleur 6 à chacune des sorties 22 de l'onduleur de façon à injecter des courants d'excitation dans chacun des enroulements 38 du stator 30 en vue de générer, dans la cavité 34 du stator 30, un champ magnétique tournant destiné à entraîner le rotor 32 en rotation autour de l'axe de rotation X-X.

En variante, le dispositif de commande 12 comporte également un moyen de détection d'un champ magnétique généré par le rotor 32, ledit champ magnétique ayant pour origine l'aimantation des éléments magnétiques 48. Dans ce cas, le dispositif de commande 12 est également configuré pour, notamment après l'étape d'excitation de la machine tournante 8, mettre en œuvre une étape de magnétisation additionnelle, qui diffère de l'étape de magnétisation décrite précédemment uniquement en ce que le dispositif de commande 12 réalise, en outre :
- une détection du champ magnétique généré par le rotor 32 ;
- un choix des m bras d'injection de courant et des k bras de sortie de courant en fonction du champ magnétique détecté.

Une telle caractéristique est avantageuse, dans la mesure un choix judicieux des sorties de magnétisation conduit à la génération, au moyen du stator, d'un champ magnétique destiné à moduler, en particulier à réduire, voire à annuler, l'aimantation des éléments magnétiques 48. Ceci a pour effet de réduire les pertes dues à la machine tournante 8 lorsque ladite machine tournante 8 n'est plus requise pour entraîner, par rapport à une situation où une telle modulation de l'aimantation des éléments magnétiques ne serait pas mise en œuvre.

Le choix des bras d'injection de courant et des bras de sortie de courant en fonction du champ magnétique détecté est, par exemple, réalisé à partir de données d'étalonnage préenregistrées dans le dispositif de commande 12. Selon un autre exemple, un tel choix est le résultat de la mise en œuvre, par le dispositif de commande 12, d'un calcul d'optimisation permettant d'approcher au mieux un champ magnétique généré souhaité par le champ magnétique susceptible d'être généré par le stator.

## Revendications

1. Système d'entraînement (2) comportant un onduleur (6), une machine tournante (8) électrique et un dispositif de commande (12),
l'onduleur (6) comportant une première entrée (14), une deuxième entrée (16), N bras connectés en parallèle entre la première entrée (14) et la deuxième entrée (16), N étant un entier naturel supérieur ou égal à 2,
chaque bras (18) comprenant un demi-bras supérieur (20) et un demi-bras inférieur (21) en série, le demi-bras supérieur (20) étant connecté à la première entrée (14), le demi-bras inférieur (21) étant connecté à la deuxième entrée (16), le demi-bras supérieur (20) et le demi-bras inférieur (21) de chaque bras (18) étant reliés entre eux en une sortie (22) correspondante de l'onduleur (6),
chaque demi-bras supérieur (20) et chaque demi-bras inférieur (21) comprenant au moins un module de commutation (26) propre à commuter entre un état passant et un état bloqué,
chacune de la première entrée (14) et de la deuxième entrée (16) étant destinée à être connectée à une borne respective d'une source (4) de courant continu, chaque sortie (22) étant associée à une phase électrique respective,
la machine tournante (8) comprenant un stator (30) et un rotor (32) mobile en rotation, relativement au stator (30), autour d'un axe de rotation (X-X), le stator (30) comprenant N enroulements (38), chaque enroulement (38) comportant une entrée (40) et une sortie (42), l'entrée (40) de chaque enroulement (38) étant connectée à une sortie (22) correspondante de l'onduleur (6), les sorties (42) des enroulements (38) du stator (30) étant connectées en un point commun (44), le rotor (32) comprenant au moins un élément magnétique (48) réalisé dans un matériau à aimantation modulable,
le dispositif de commande (12) étant configuré pour, au cours d'une étape de magnétisation de chaque élément magnétique (48) du rotor (32), commander l'onduleur (6) de façon à, simultanément, pendant un intervalle temporel de magnétisation prédéterminé :
- pour chacun parmi m bras (18) de l'onduleur (6), formant chacun un bras d'injection de courant, m étant un entier naturel compris entre 1 et N-1, commander chaque module de commutation du demi-bras supérieur correspondant pour qu'il se trouve dans l'état passant, et commander chaque module de commutation du demi-bras inférieur correspondant pour qu'il se trouve dans l'état bloqué ;
- pour chacun parmi k bras (18) de l'onduleur (6), pris au sein des N-m autres bras (18) de l'onduleur, et formant chacun un bras de sortie de courant, commander chaque module de commutation du demi-bras supérieur (20) correspondant pour qu'il se trouve dans l'état bloqué, et commander chaque module de commutation du demi-bras inférieur (21) correspondant pour qu'il se trouve dans l'état passant ; et
- pour chacun des N-m-k autres bras (18), commander chaque module de commutation (26) correspondant pour qu'il se trouve dans l'état bloqué,
**caractérisé en ce que** ledit système comprend en outre, un premier organe de commutation (50), un deuxième organe de commutation (52) et une charge (54),
le premier organe de commutation (50) étant connecté en série entre chaque bras (18) et la deuxième entrée (16) de l'onduleur (6),
le deuxième organe de commutation (52) et la charge (54) étant reliés en série, et connectés en parallèle du premier organe de commutation,
le dispositif de commande (12) étant configuré pour, au cours de l'étape de magnétisation, commander le premier organe de commutation (50) pour qu'il se trouve dans un état bloqué, et commander le deuxième organe de commutation (52) pour qu'il se trouve dans un état passant.

2. Système d'entraînement (2) selon la revendication 1, dans lequel le dispositif de commande (12) comporte un organe de détection d'un champ magnétique généré par le rotor (32), le dispositif de commande (12) étant, en outre, configuré pour, au cours de l'étape de magnétisation :
- détecter le champ magnétique généré par le rotor (32) ;
- choisir chacun des m bras d'injection de courant et des k bras de sortie de courant en fonction du champ magnétique détecté.

3. Système d'entraînement (2) selon l'une quelconque des revendications 1 ou 2, dans lequel le dispositif de commande (12) est, en outre, configuré pour mettre en œuvre une étape d'excitation de la machine tournante, postérieure à l'étape de magnétisation, le dispositif de commande (12) étant configuré pour, lors de l'étape d'excitation, commander l'onduleur (6) selon une loi de commande d'onduleur prédéterminée pour connecter, successivement au cours du temps, chaque sortie (22) de l'onduleur (6) à la première entrée (14) et/ou la deuxième entrée (16) de l'onduleur (6) afin d'entraîner le rotor (32) en rotation autour d'un axe de rotation (X-X) correspondant.

4. Système d'entraînement (2) selon l'une quelconque des revendications 1 à 3, dans lequel la durée de l'intervalle temporel de magnétisation dépend du matériau à aimantation modulable et/ou des m bras d'injection de courant et des k bras de sortie de courant.

5. Système d'entraînement (2) selon la revendication 4, dans lequel la durée de l'intervalle temporel de magnétisation dépend, en outre, d'une impédance de la charge (52).

6. Procédé d'alimentation d'une machine tournante (8) électrique au moyen d'un onduleur (6), l'onduleur (6) comportant une première entrée (14), une deuxième entrée (16), N bras connectés en parallèle entre la première entrée (14) et la deuxième entrée (16), N étant un entier naturel supérieur ou égal à 2,
chaque bras (18) comprenant un demi-bras supérieur et un demi-bras inférieur en série, le demi-bras supérieur étant connecté à la première entrée (14), le demi-bras inférieur étant connecté à la deuxième entrée (16), le demi- bras supérieur et le demi-bras inférieur de chaque bras étant reliés entre eux en une sortie (22) correspondante de l'onduleur (6),
chacun du demi-bras supérieur et du demi-bras inférieur comprenant au moins un module de commutation propre à commuter entre un état passant et un état bloqué, chacune de la première entrée (14) et de la deuxième entrée (16) étant destinée à être connectée à une borne respective d'une source (4) de courant continu, chaque sortie (22) étant associée à une phase électrique respective,
la machine tournante (8) comprenant un stator (30) et un rotor (32) mobile en rotation, relativement au stator (30), autour d'un axe de rotation (X-X), le stator (30) comprenant N enroulements (38), chaque enroulement (38) comportant une entrée (40) et une sortie (42), l'entrée (40) de chaque enroulement (38) étant connectée à une sortie (22) correspondante de l'onduleur (6), les sorties (42) des enroulements (38) du stator (30) étant connectées en un point commun (44),
le rotor (32) comprend au moins un élément magnétique (48) réalisé dans un matériau à aimantation modulable,
le procédé d'alimentation comprenant une étape de magnétisation de chaque élément magnétique (48) du rotor (32) comportant :
- la connexion de chacune de la première entrée (14) et de la deuxième entrée (16) à une borne respective d'une source (4) de courant continu ; et
- simultanément, pendant un intervalle temporel de magnétisation prédéterminé :
• pour chacun parmi m bras (18) de l'onduleur (6), formant chacun un bras d'injection de courant, m étant un entier naturel compris entre 1 et N-1, la commande de chaque module de commutation du demi-bras supérieur correspondant pour qu'il se trouve dans l'état passant, et la commande de chaque module de commutation du demi-bras inférieur correspondant pour qu'il se trouve dans l'état bloqué ;
• pour chacun parmi k bras (18), pris au sein des N-m autres bras de l'onduleur (6), et formant chacun un bras de sortie de courant, la commande de chaque module de commutation du demi-bras supérieur correspondant pour qu'il se trouve dans un état bloqué, et la commande de chaque module de commutation du demi-bras inférieur correspondant pour qu'il se trouve dans un état passant ; et
• pour chacun des N-m-k autres bras (18), la commande de chaque module de commutation (26) correspondant pour qu'il se trouve dans l'état bloqué,
de façon à injecter simultanément, dans chaque enroulement (38), un courant électrique pour générer, dans la cavité (34) du stator (30), un champ magnétique non nul destiné à magnétiser chaque élément magnétique (48),
ledit procédé étant **caractérisé par** l'utilisation d'un système d'entraînement comportant l' onduleur (6), la machine tournante (8) électrique et le dispositif de commande (12) et comprenant, en outre, un premier organe de commutation (50), un deuxième organe de commutation (52) et une charge (54),
le premier organe de commutation (50) étant connecté en série entre chaque bras (18) et la deuxième entrée (16) de l'onduleur (6),
le deuxième organe de commutation (52) et la charge (54) étant reliés en série, et connectés en parallèle du premier organe de commutation,
le dispositif de commande (12) étant configuré pour, au cours de l'étape de magnétisation, commander le premier organe de commutation (50) pour qu'il se trouve dans un état bloqué, et commander le deuxième organe de commutation (52) pour qu'il se trouve dans un état passant.

7. Procédé d'alimentation selon la revendication 6, comportant, en outre, lors de l'étape de magnétisation :
- la détection d'un champ magnétique généré par le rotor (32) ; et
- le choix de chacun des m bras d'injection de courant et des k bras de sortie de courant en fonction du champ magnétique détecté.

8. Procédé d'alimentation selon la revendication 6 ou 7, comportant, en outre, une étape d'excitation de la machine tournante ultérieure à l'étape de magnétisation, et comprenant la commande de l'onduleur (6) selon une loi de commande d'onduleur prédéterminée pour connecter, successivement au cours du temps, chaque sortie (22) de l'onduleur (6) à la première entrée (14) et/ou la deuxième entrée (16) de l'onduleur (6), de façon à injecter du courant électrique dans les enroulements (38) du stator (30) pour générer, dans la cavité (34) du stator (30), un champ magnétique tournant destiné à entraîner le rotor (32) en rotation autour de l'axe de rotation (X-X).

9. Ensemble de compression comprenant un dispositif de compression de fluide et un système d'entraînement selon l'une quelconque des revendications 1 à 5, le dispositif de compression de fluide étant couplé au stator de la machine tournante (8) du système d'entraînement (2) pour son entraînement.

10. Ensemble de compression selon la revendication 9, dans lequel ledit dispositif de compression de fluide est un turbocompresseur associant une turbine et un compresseur, notamment pour un moteur à combustion interne, ou une microturbine.

## Patentansprüche

1. Antriebssystem (2), das einen Wechselrichter (6), eine rotierende elektrische Maschine (8) und eine Steuereinrichtung (12) aufweist,
wobei der Wechselrichter (6) einen ersten Eingang (14), einen zweiten Eingang (16), N Arme aufweist, die zwischen dem ersten Eingang (14) und dem zweiten Eingang (16) parallelgeschaltet sind, wobei N eine natürliche ganze Zahl größer gleich 2 ist,
wobei jeder Arm (18) in Reihe geschaltet einen oberen Halbarm (20) und einen unteren Halbarm (21) umfasst,
wobei der obere Halbarm (20) mit dem ersten Eingang (14) verbunden ist, der untere Halbarm (21) mit dem zweiten Eingang (16) verbunden ist, der obere Halbarm (20) und der untere Halbarm (21) von jedem Arm (18) miteinander an einem entsprechenden Ausgang (22) des Wechselrichters (6) verbunden sind,
wobei jeder obere Halbarm (20) und jeder untere Halbarm (21) mindestens ein Schaltmodul (26) umfasst, das für die Umschaltung zwischen einem eingeschalteten Zustand und einem ausgeschalteten Zustand geeignet ist,
wobei sowohl der erste Eingang (14) als auch der zweite Eingang (16) mit einem jeweiligen Anschluss einer Gleichstromquelle (4) verbunden werden soll, wobei jeder Ausgang (22) einer entsprechenden elektrischen Phase zugehörig ist,
wobei die rotierende Maschine (8) einen Stator (30) und einen relativ zum Stator (30) um eine Rotationsachse (X-X) herum drehbeweglichen Rotor (32) umfasst, wobei der Stator (30) N Wicklungen (38) umfasst, wobei jede Wicklung (38) einen Eingang (40) und einen Ausgang (42) aufweist, wobei der Eingang (40) jeder Wicklung (38) mit einem entsprechenden Ausgang (22) des Wechselrichters (6) verbunden ist, wobei die Ausgänge (42) der Wicklungen (38) des Stators (30) an einem gemeinsamen Punkt (44) verbunden sind,
wobei der Rotor (32) mindestens ein magnetisches Element (48) umfasst, das aus einem Werkstoff mit veränderbarer Magnetisierung gefertigt ist,
wobei die Steuereinrichtung (12) so ausgestaltet ist, dass sie im Verlauf eines Magnetisierungsschritts für jedes magnetische Element (48) des Rotors (32) den Wechselrichter (6) derart steuert, dass während eines vorher festgelegten Magnetisierungszeitraums gleichzeitig:
- für jeden von m Armen (18) des Wechselrichters (6), der jeweils einen Arm zum Einspeisen von Strom bildet, wobei m eine natürliche ganze Zahl zwischen 1 und N-1 ist, jedes Schaltmodul des entsprechenden oberen Halbarms so gesteuert wird, dass es sich im eingeschalteten Zustand befindet und jedes Schaltmodul des entsprechenden unteren Halbarms so gesteuert wird, dass es sich im ausgeschalteten Zustand befindet;
- für jeden von k Armen (18) des Wechselrichters (6), der aus N-m weiteren Armen (18) des Wechselrichters gewählt wird und jeweils einen Stromausgabearm bildet, jedes Schaltmodul des entsprechenden oberen Halbarms (20) so gesteuert wird, dass es sich im ausgeschalteten Zustand befindet und jedes Schaltmodul des entsprechenden unteren Halbarms (21) so gesteuert wird, dass es sich im eingeschalteten Zustand befindet;
- für jeden der N-m-k weiteren Arme (18) jedes entsprechende Schaltmodul (26) so gesteuert wird, dass es sich im ausgeschalteten Zustand befindet,
**dadurch gekennzeichnet, dass** das System ferner ein erstes Schaltelement (50), ein zweites Schaltelement (52) und eine Last (54) umfasst,
wobei das erste Schaltelement (50) zwischen jedem Arm (18) und dem zweiten Eingang (16) des Wechselrichters (6) in Reihe geschaltet ist,
wobei das zweite Schaltelement (52) und die Last (54) in Reihe geschaltet sind und zum ersten Schaltelement parallelgeschaltet sind,
wobei die Schalteinrichtung (12) so ausgestaltet ist, dass sie im Verlauf des Magnetisierungsschritts das erste Schaltelement (50) so steuert, dass es sich im ausgeschalteten Zustand befindet und das zweite Schaltelement (52) so steuert, dass es sich im eingeschalteten Zustand befindet.

2. Antriebssystem (2) nach Anspruch 1, wobei die Steuereinrichtung (12) ein Element zur Erfassung eines Magnetfelds aufweist, das vom Rotor (32) erzeugt wird, wobei die Steuereinrichtung (12) ferner so ausgestaltet ist, dass sie im Verlauf des Magnetisierungsschritts:
- das Magnetfeld erfasst, das vom Rotor (32) erzeugt wird;
- je nach erfasstem Magnetfeld jeden der m Arme zum Einspeisen von Strom und der k Stromausgabearme auswählt.

3. Antriebssystem (2) nach einem der Ansprüche 1 oder 2, wobei die Steuereinrichtung (12) ferner so ausgestaltet ist, dass sie nach dem Magnetisierungsschritt einen Schritt zur Erregung der rotierenden Maschine durchführt, wobei die Steuereinrichtung (12) so ausgestaltet ist, dass sie beim Erregungsschritt den Wechselrichter (6) nach einer vorgegebenen Steuerungsart für den Wechselrichter steuert und so im Zeitverlauf nacheinander jeden Ausgang (22) des Wechselrichters (6) mit dem ersten Eingang (14) und/oder dem zweiten Eingang (16) des Wechselrichters (6) verbindet, damit der Rotor (32) um eine entsprechende Rotationsachse (X-X) herum in Drehung versetzt wird.

4. Antriebssystem (2) nach einem der Ansprüche 1 bis 3, wobei die Dauer des Magnetisierungszeitraums von dem Werkstoff mit veränderbarer Magnetisierung und/oder den m Armen zum Einspeisen von Strom und den k Stromausgabearmen abhängt.

5. Antriebssystem (2) nach Anspruch 4, wobei die Dauer des Magnetisierungszeitraums ferner von einer Impedanz der Last (52) abhängt.

6. Verfahren zur Versorgung einer rotierenden elektrischen Maschine (8) mithilfe eines Wechselrichters (6), wobei der Wechselrichter (6) einen ersten Eingang (14), einen zweiten Eingang (16), N Arme aufweist, die zwischen dem ersten Eingang (14) und dem zweiten Eingang (16) parallelgeschaltet sind, wobei N eine natürliche ganze Zahl größer gleich 2 ist,
wobei jeder Arm (18) in Reihe geschaltet einen oberen Halbarm und einen unteren Halbarm umfasst, wobei der obere Halbarm mit dem ersten Eingang (14) verbunden ist, der untere Halbarm mit dem zweiten Eingang (16) verbunden ist, der obere Halbarm und der untere Halbarm von jedem Arm miteinander an einem entsprechenden Ausgang (22) des Wechselrichters (6) verbunden sind,
wobei sowohl der obere Halbarm als auch der untere Halbarm mindestens ein Schaltmodul umfasst, das für die Umschaltung zwischen einem eingeschalteten Zustand und einem ausgeschalteten Zustand geeignet ist,
wobei sowohl der erste Eingang (14) als auch der zweite Eingang (16) mit einem jeweiligen Anschluss einer Gleichstromquelle (4) verbunden werden soll, wobei jeder Ausgang (22) einer entsprechenden elektrischen Phase zugehörig ist,
wobei die rotierende Maschine (8) einen Stator (30) und einen relativ zum Stator (30) um eine Rotationsachse (X-X) herum drehbeweglichen Rotor (32) umfasst, wobei der Stator (30) N Wicklungen (38) umfasst, wobei jede Wicklung (38) einen Eingang (40) und einen Ausgang (42) aufweist, wobei der Eingang (40) jeder Wicklung (38) mit einem entsprechenden Ausgang (22) des Wechselrichters (6) verbunden ist, wobei die Ausgänge (42) der Wicklungen (38) des Stators (30) an einem gemeinsamen Punkt (44) verbunden sind,
wobei der Rotor (32) mindestens ein magnetisches Element (48) umfasst, das aus einem Werkstoff mit veränderbarer Magnetisierung gefertigt ist,
wobei das Versorgungsverfahren einen Magnetisierungsschritt für jedes magnetische Element (48) des Rotors (32) umfasst, der Folgendes umfasst:
- Verbinden von sowohl dem ersten Eingang (14) als auch dem zweiten Eingang (16) mit einem jeweiligen Anschluss einer Gleichstromquelle (4); und
- gleichzeitig, während eines vorher festgelegten Magnetisierungszeitraums:
- für jeden von m Armen (18) des Wechselrichters (6), der jeweils einen Arm zum Einspeisen von Strom bildet, wobei m eine natürliche ganze Zahl zwischen 1 und N-1 ist, Steuern jedes Schaltmoduls des entsprechenden oberen Halbarms so, dass es sich im eingeschalteten Zustand befindet, und Steuern jedes Schaltmoduls des entsprechenden unteren Halbarms so, dass es sich im ausgeschalteten Zustand befindet;
- für jeden von k Armen (18), der aus N-m weiteren Armen des Wechselrichters (6) gewählt wird und jeweils einen Stromausgabearm bildet, Steuern jedes Schaltmoduls des entsprechenden oberen Halbarms so, dass es sich im ausgeschalteten Zustand befindet, und Steuern jedes Schaltmoduls des entsprechenden unteren Halbarms so, dass es sich im eingeschalteten Zustand befindet; und
- für jeden der N-m-k weiteren Arme (18) Steuern jedes entsprechenden Schaltmoduls (26) so, dass es sich im ausgeschalteten Zustand befindet,
derart, dass in jede Wicklung (38) gleichzeitig ein elektrischer Strom eingespeist wird, damit in dem Hohlraum (34) des Stators (30) ein von Null verschiedenes Magnetfeld erzeugt wird, das jedes magnetische Element (48) magnetisieren soll,
wobei das Verfahren durch die Verwendung eines Antriebssystems gekennzeichnet ist, das den Wechselrichter (6), die rotierende elektrische Maschine (8) und die Steuereinrichtung (12) aufweist und ferner ein erstes Schaltelement (50), ein zweites Schaltelement (52) und eine Last (54) umfasst,
wobei das erste Schaltelement (50) zwischen jedem Arm (18) und dem zweiten Eingang (16) des Wechselrichters (6) in Reihe geschaltet ist,
wobei das zweite Schaltelement (52) und die Last (54) in Reihe geschaltet sind und zum ersten Schaltelement parallelgeschaltet sind,
wobei die Schalteinrichtung (12) so ausgestaltet ist, dass sie im Verlauf des Magnetisierungsschritts das erste Schaltelement (50) so steuert, dass es sich im ausgeschalteten Zustand befindet und das zweite Schaltelement (52) so steuert, dass es sich im eingeschalteten Zustand befindet.

7. Versorgungsverfahren nach Anspruch 6, das ferner beim Magnetisierungsschritt Folgendes umfasst:
- Erfassen eines Magnetfelds, das vom Rotor (32) erzeugt wird; und
- Auswählen von jedem der m Arme zum Einspeisen von Strom und der k Stromausgabearme je nach erfasstem Magnetfeld.

8. Versorgungsverfahren nach Anspruch 6 oder 7, das ferner einen Schritt zur Erregung der rotierenden Maschine nach dem Magnetisierungsschritt umfasst, der das Steuern des Wechselrichters (6) nach einer vorgegebenen Steuerungsart für den Wechselrichter umfasst, wodurch im Zeitverlauf nacheinander jeder Ausgang (22) des Wechselrichters (6) mit dem ersten Eingang (14) und/oder dem zweiten Eingang (16) des Wechselrichters (6) verbunden wird, damit elektrischer Strom in die Wicklungen (38) des Stators (30) eingespeist wird und so im Hohlraum (34) des Stators (30) ein Drehfeld erzeugt wird, das den Rotor (32) um die Rotationsachse (X-X) herum in Drehung versetzen soll.

9. Kompressionsanordnung, die eine Vorrichtung zum Verdichten von Fluiden und ein Antriebssystem nach einem der Ansprüche 1 bis 5 umfasst, wobei die Vorrichtung zum Verdichten von Fluiden, damit sie angetrieben wird, mit dem Stator der drehenden Maschine (8) des Antriebssystems (2) gekoppelt ist.

10. Kompressionsanordnung nach Anspruch 9, wobei die Vorrichtung zum Verdichten von Fluiden ein Turbolader ist, der eine Turbine und einen Verdichter miteinander vereint, insbesondere für einen Verbrennungsmotor oder eine Mikrogasturbine.

## Claims

1. Drive system (2) including an inverter (6), an electric rotary machine (8) and a control device (12), the inverter (6) including a first input (14), a second input (16), N arms connected in parallel between the first input (14) and the second input (16), N being a natural number greater than or equal to 2,
each arm (18) comprising an upper half-arm (20) and a lower half-arm (21) in series, the upper half-arm (20) being connected to the first input (14), the lower half-arm (21) being connected to the second input (16), the upper half-arm (20) and the lower half-arm (21) of each arm (18) being connected to one another at a corresponding output (22) of the inverter (6),
each upper half-arm (20) and each lower half-arm (21) comprising at least one switching module (26) capable of switching between a conducting state and a blocking state,
the first input (14) and the second input (16) each being intended to be connected to a respective terminal of a DC source (4), each output (22) being associated with a respective electrical phase,
the rotary machine (8) comprising a stator (30) and a rotor (32) that is rotatable, relative to the stator (30), about an axis of rotation (X-X), the stator (30) comprising N windings (38), each winding (38) having an input (40) and an output (42), the input (40) of each winding (38) being connected to a corresponding output (22) of the inverter (6), the outputs (42) of the windings (38) of the stator (30) being connected at a common point (44),
the rotor (32) comprising at least one magnetic element (48) made of a tuneable magnetic material,
the control device (12) being configured to, during a step of magnetizing each magnetic element (48) of the rotor (32), control the inverter (6) to, simultaneously, during a predetermined magnetization time interval:
- for each of m arms (18) of the inverter (6), each forming a current injection arm, m being a natural number between 1 and N-1, control each switching module of the corresponding upper half-arm to be in the conducting state, and control each switching module of the corresponding lower half-arm to be in the blocking state;
- for each of k arms (18) of the inverter (6), taken from the N-m other arms (18) of the inverter, and each forming a current output arm, control each switching module of the corresponding upper half-arm (20) to be in the blocking state, and control each switching module of the corresponding lower half-arm (21) to be in the conducting state; and
- for each of the N-m-k other arms (18), control each corresponding switching module (26) to be in the blocking state,
**characterized in that** said system further comprises a first switching member (50), a second switching member (52) and a load (54),
the first switching member (50) being connected in series between each arm (18) and the second input (16) of the inverter (6),
the second switching member (52) and the load (54) being connected in series, and connected in parallel with the first switching member,
the control device (12) being configured to, during the magnetizing step, control the first switching member (50) to be in a blocking state and control the second switching member (52) to be in a conducting state.

2. Drive system (2) according to Claim 1, wherein the control device (12) includes a member for detecting a magnetic field generated by the rotor (32), the control device (12) being further configured to, during the magnetizing step:
- detect the magnetic field generated by the rotor (32);
- choose each of the m current injection arms and k current output arms depending on the detected magnetic field.

3. Drive system (2) according to either of Claims 1 and 2, wherein the control device (12) is further configured to implement a step of exciting the rotary machine after the magnetizing step, the control device (12) being configured to, during the excitation step, control the inverter (6) according to a predetermined inverter control law to connect, successively over time, each output (22) of the inverter (6) to the first input (14) and/or the second input (16) of the inverter (6) in order to drive the rotor (32) in rotation about a corresponding axis of rotation (X-X).

4. Drive system (2) according to any one of Claims 1 to 3, wherein the duration of the magnetization time interval is dependent on the tuneable magnetic material and/or the m current injection arms and k current output arms.

5. Drive system (2) according to Claim 4, wherein the duration of the magnetization time interval is further dependent on an impedance of the load (52).

6. Method for supplying power to an electric rotary machine (8) using an inverter (6), the inverter (6) including a first input (14), a second input (16), N arms connected in parallel between the first input (14) and the second input (16), N being a natural number greater than or equal to 2,
each arm (18) comprising an upper half-arm and a lower half-arm in series, the upper half-arm being connected to the first input (14), the lower half-arm being connected to the second input (16), the upper half-arm and the lower half-arm of each arm being connected to one another at a corresponding output (22) of the inverter (6),
each of the upper half-arm and the lower half-arm comprising at least one switching module capable of switching between a conducting state and a blocking state,
the first input (14) and the second input (16) each being intended to be connected to a respective terminal of a DC source (4), each output (22) being associated with a respective electrical phase,
the rotary machine (8) comprising a stator (30) and a rotor (32) that is rotatable, relative to the stator (30), about an axis of rotation (X-X), the stator (30) comprising N windings (38), each winding (38) having an input (40) and an output (42), the input (40) of each winding (38) being connected to a corresponding output (22) of the inverter (6), the outputs (42) of the windings (38) of the stator (30) being connected at a common point (44),
the rotor (32) comprises at least one magnetic element (48) made of a tuneable magnetic material,
the power supply method comprising a step of magnetizing each magnetic element (48) of the rotor (32) including:
- connecting each of the first input (14) and the second input (16) to a respective terminal of a DC source (4); and
- simultaneously, during a predetermined magnetization time interval:
• for each of m arms (18) of the inverter (6), each forming a current injection arm, m being a natural number between 1 and N-1, controlling each switching module of the corresponding upper half-arm to be in the conducting state, and controlling each switching module of the corresponding lower half-arm to be in the blocking state;
• for each of k arms (18), taken from the N-m other arms of the inverter (6), and each forming a current output arm, controlling each switching module of the corresponding upper half-arm to be in a blocking state, and controlling each switching module of the corresponding lower half-arm to be in a conducting state; and
• for each of the N-m-k other arms (18), controlling each corresponding switching module (26) to be in the blocking state,
to simultaneously inject an electric current into each winding (38) to generate a non-zero magnetic field in the cavity (34) of the stator (30) to magnetize each magnetic element (48),
said method being **characterized by** the use of a drive system including the inverter (6), the electric rotary machine (8) and the control device (12) and further comprising a first switching member (50), a second switching member (52) and a load (54),
the first switching member (50) being connected in series between each arm (18) and the second input (16) of the inverter (6),
the second switching member (52) and the load (54) being connected in series, and connected in parallel with the first switching member,
the control device (12) being configured to, during the magnetizing step, control the first switching member (50) to be in a blocking state and control the second switching member (52) to be in a conducting state.

7. Power supply method according to Claim 6, further including, during the magnetizing step:
- detecting a magnetic field generated by the rotor (32); and
- choosing each of the m current injection arms and k current output arms depending on the detected magnetic field.

8. Power supply method according to Claim 6 or 7, further including a step of exciting the rotary machine after the magnetizing step, and comprising controlling the inverter (6) according to a predetermined inverter control law to connect, successively over time, each output (22) of the inverter (6) to the first input (14) and/or the second input (16) of the inverter (6) in order to inject electric current into the windings (38) of the stator (30) to generate a rotary magnetic field in the cavity (34) of the stator (30) to drive the rotor (32) in rotation about the axis of rotation (X-X).

9. Compression assembly comprising a fluid compression device and a drive system according to any one of Claims 1 to 5, the fluid compression device being coupled to the stator of the rotary machine (8) of the drive system (2) used to drive it.

10. Compression assembly according to Claim 9, wherein said fluid compression device is a turbocompressor that brings together a turbine and a compressor, notably for an internal combustion engine, or a micro-turbine.
